# EUROPEAN PATENT SPECIFICATION

(11) **EP 3 134 565 B1**
(45) Date of publication and mention of the grant of the patent: **24.01.2018**
(21) Application number: 15719099.2
(22) Date of filing: 15.04.2015
(51) Int. Cl.: D01F 6/30, D01F 9/21, C08L 23/00

(54) **A PROCESS FOR MAKING A STABILIZED FABRICATED ARTICLE FROM POLYOLEFIN**
VERFAHREN ZUR HERSTELLUNG EINES STABILISIERTEN HERGESTELLTEN ARTIKELS AUS POLYOLEFIN
PROCÉDÉ DE FABRICATION D'ARTICLE FABRIQUÉ STABILISÉ À PARTIR DE POLYOLÉFINE

(30) Priority: 21.04.2014 US 201461982107 P
(43) Date of publication of application: 01.03.2017
(73) Proprietor: Dow Global Technologies LLC, Midland, MI 48674 (US)
(72) Inventor: BARTON, Bryan E., Midland, MI 48642 (US); BILLOVITS, Gerald F., Midland, MI 48642 (US)
(74) Representative: Houghton, Mark Phillip
(86) International application number: PCT/US2015/025927
(87) International publication number: WO 2015/164145

(56) References cited:
- WO-A2-92/03601
- GB-A- 961 795
- GB-A- 984 648
- US-A- 4 131 644
- POSTEMA A R ET AL: "AMORPHOUS CARBON FIBRES FROM LINEAR LOW DENSITY POLYETHYLENE", JOURNAL OF MATERIALS SCIENCE, KLUWER ACADEMIC PUBLISHERS, DORDRECHT, vol. 25, no. 10, 1 October 1990 (1990-10-01), pages 4216-4222, XP000168890, ISSN: 0022-2461, DOI: 10.1007/BF00581075
- ISMAIL KARACAN ET AL: "Use of sulfonation procedure for the development of thermally stabilized isotactic polypropylene fibers prior to carbonization", JOURNAL OF APPLIED POLYMER SCIENCE, vol. 123, no. 1, 26 July 2011 (2011-07-26) , pages 234-245, XP055008721, ISSN: 0021-8995, DOI: 10.1002/app.34454

## Description

### Field

The present disclosure relates generally to a stabilized fabricated article and a process for making the stabilized fabricated article from polyolefin, and further relates to a carbonaceous article and a process for making the carbonaceous article from the stabilized fabricated article.

### Background

Previously, carbonaceous articles, such as carbon fibers, have been produced primarily from polyacrylonitrile (PAN), pitch, or cellulose precursors. The process for making carbonaceous articles begins by forming a fabricated article, such as a fiber or a film, from the precursor. Precursors may be formed into fabricated articles using standard techniques for forming or molding polymers. The fabricated article is subsequently stabilized to allow the fabricated article to substantially retain shape during the subsequent heat-processing steps; such stabilization typically involves a combination of oxidation and heat and generally results in dehydrogenation, ring formation, oxidation and crosslinking of the precursor which defines the fabricated article. The stabilized fabricated article is then converted into a carbonaceous article by heating the stabilized fabricated article in an inert atmosphere. While the general steps for producing a carbonaceous article are the same for the variety of precursors, the details of those steps vary widely depending on the chemical makeup of the selected precursor.

Polyolefins have been investigated as an alternative precursor for carbonaceous articles, but a suitable and economically viable preparation process has proven elusive.

U.S. Patent 4,070,446 discloses a sulfonation process for treating non-crosslinked polyethylene fibers, where the polyethylene fibers are reacted with sulfuric acid at a temperature of 100 °C-180 °C to form a stabilized precursor to carbon fiber. The process described therein does not involve heating the polyethylene fibers in air or crosslinking the polyethylene fibers. Further, the process described herein does not require the use of a large volume of sulfuric acid.

U.K. Patent 1,283,714 discloses a process for crosslinking polyethylene fibers using 100-400 Mrads of gamma rays followed by heating the crosslinked fibers in air at a temperature of 200 °C-300 °C. Using gamma rays to crosslink polyethylene fibers produces fibers having different chemical structures than polyethylene crosslinked by chemical processes. Premnath et al. (Biomaterials, 17, 1996, pp. 1741-1753) describes the chemical transformation of gamma-irradiated polyethylene as providing "new chain ends (from scission), cross-links, internal vinyl groups (internal double bonds), stable free radicals and carbon-oxygen species" (quoted from p. 1747). Further, Ohnishi et al. (Journal of Polymer Science: Part A, 1, 1963, pp 605-623), explains that gamma irradiation of polyethylene leads to a high concentration of persistent allylic radicals, which exhibit different reactivity with oxygen than alkyl radicals. Irradiation of polyolefins produces a chemical structure which varies from the chemical structure of the same polyolefin crosslinked via chemical processes. As such, the reactivity in heated air of irradiated polyolefin differs from the reactivity in heated air of chemically crosslinked polyolefin. Further, the use of gamma irradiation is cost prohibitive, requiring shielding to protect personnel and equipment from unwanted exposure.

The cost of producing the precursors to the carbonaceous articles typically accounts for a significant portion of the total cost to produce the carbonaceous articles. A more economical precursor is desired. Further, a more economical process for producing a carbonaceous article is desired. The problems addressed by the present disclosure are the need for an alternative precursor for carbonaceous articles and a need for an alternative process for converting a fabricated article to a carbonaceous article.

### Statement of Invention

We have now found that fabricated articles produced from a polyolefin resin having crosslinkable functional groups crosslinked by a chemical agent can be treated in a heated oxidizing atmosphere to yield a stabilized fabricated article. It has been further found that such stabilized fabricated articles are suitable for being processed to yield a carbonaceous article.

In one aspect, there is provided a process for producing a stabilized fabricated article, the process comprising: (a) providing a polyolefin resin having crosslinkable functional groups; (b) converting the polyolefin resin to a fabricated article; (c) crosslinking at least a portion of the crosslinkable functional groups to yield a crosslinked fabricated article; and (d) heating the crosslinked fabricated article in an oxidizing environment to yield the stabilized fabricated article.

A stabilized fabricated article may be prepared by a process described herein.

A carbonaceous article may be prepared by a process as described herein.

### Detailed Description

Unless otherwise indicated, numeric ranges, for instance "from 2 to 10," are inclusive of the numbers defining the range (e.g., 2 and 10).

Unless otherwise indicated, ratios, percentages, and parts are by weight.

Unless otherwise indicated, the crosslinkable functional group content for a polyolefin resin is characterized by the mol% crosslinkable functional groups, which is calculated as the number of mols of crosslinkable functional groups divided by the total number of mols of monomer units contained in the polyolefin.

Unless otherwise indicated, "monomer" refers to a molecule which can undergo polymerization, thereby contributing constitutional units to the essential structure of a macromolecule, for example, a polyolefin.

As noted above, in one aspect, the present disclosure describes a process for producing a stabilized fabricated article from a polyolefin resin. Polyolefins are a class of polymers produced from one or more olefin monomer. The polymers described herein may be formed from one or more types of monomers. Polyethylene is the preferred polyolefin resin, but other polyolefin resins may be substituted. For example, a polyolefin produced from ethylene, propylene, or other alpha-olefin (for instance, 1-butene, 1-hexene, 1-octene), or a combination thereof, is also suitable. The polyolefins described herein are typically provided in resin form, subdivided into pellets or granules of a convenient size for further melt or solution processing.

The polyolefin resins described herein have been modified to include crosslinkable functional groups which are suitable for reacting to crosslink the polyolefin resin. In some embodiments, the polyolefin resin having crosslinkable functional groups contains at least 0.1 mol% crosslinkable functional groups. In some embodiments, the polyolefin resin having crosslinkable functional groups contains at least one crosslinkable functional group per polymer chain. In some embodiments, the polyolefin resin having crosslinkable functional groups contains up to 0.5 mol% crosslinkable functional groups, preferably, up to 1.0 mol% crosslinkable functional groups, more preferably up to 5.0 mol% crosslinkable functional groups. In some embodiments, the polyolefin resin may include as much as 50 mol% of crosslinkable functional groups depending on the monomer selected to form the polyolefin resin. In some embodiments, the polyolefin resin having crosslinkable functional groups has a bulk density of at least 0.87 g/cm³. In some embodiments, the polyolefin resin having crosslinkable functional groups has a bulk density of no more than 0.955 g/cm³. The crosslinkable functional groups are incorporated in the polyolefin resin according to known mechanisms, for example, ethylene can be copolymerized with vinyl functional comonomers containing the desired crosslinkable functional group, or a related chemical moiety which is a precursor to the desired crosslinkable functional group, to provide the desired polyolefin resin having crosslinkable functional groups. Copolymers are suitable for use as the polyolefin resin having crosslinkable functional groups where one or more alpha-olefins have been copolymerized with another monomer containing a group suitable for serving as a crosslinkable functional group, for example, dienes, carbon monoxide, glycidyl methacrylate, acrylic acid, vinyl acetate, maleic anhydride, or vinyl trimethoxy silane (VTMS) are among the monomers suitable for being copolymerized with the alpha-olefin. Further, the polyolefin resin having crosslinkable functional groups may also be produced from a poly(alpha-olefin) which has been modified by grafting a functional group moiety onto the base polyolefin, wherein the functional group is selected based on its ability to subsequently enable crosslinking of the given polyolefin. For example, grafting of this type may be carried out by use of free radical initiators (such as peroxides) and vinyl monomers (such as VTMS, dienes, vinyl acetate, acrylic acid, methacrylic acid, acrylic and methacrylic esters such as glycidyl methacrylate and methacryloxypropyl trimethoxysilane, allyl amine, p-aminostyrene, dimethylaminoethyl methacrylate) or via azido-functionalized molecules (such as 4-[2-(trimethoxysilyl)ethyl)]benzenesulfonyl azide). Polyolefin resins having crosslinkable functional groups may be produced from a polyolefin resin, or may be purchased commercially. Examples of commercially available polyolefin resins having crosslinkable functional groups include SI-LINK sold by The Dow Chemical Company, PRIMACOR sold by The Dow Chemical Company, EVAL resins sold by Kuraray, and LOTADER AX8840 sold by Arkema.

As described above, the polyolefin resin is processed to form a fabricated article. A fabricated article is an article which has been fabricated from the polyolefin resin having crosslinkable functional groups. The fabricated article is formed using known polyolefin fabrication techniques, for example, melt or solution spinning to form fibers, film extrusion or film casting or a blown film process to form films, die extrusion or injection molding or compression molding to form more complex shapes, or solution casting. The fabrication technique is selected according to the desired geometry of the target carbonaceous article, and the desired physical properties of the same. For example, where the desired carbonaceous article is a carbon fiber, fiber spinning is a suitable fabrication technique. As another example, where the desired carbonaceous article is a carbon film, compression molding is a suitable fabrication technique.

As noted above, at least a portion of the crosslinkable functional groups of the polyolefin resin are crosslinked to yield a crosslinked fabricated article. In some embodiments, crosslinking is carried out via chemical crosslinking. Thus, in some embodiments, the crosslinked fabricated article is a fabricated article which has been treated with one or more chemical agents to crosslink the crosslinkable functional groups of the polyolefin resin having crosslinkable functional groups. Such chemical agent functions to initiate the formation of intramolecular chemical bonds between the crosslinkable functional groups or reacts with the crosslinkable functional groups to form intramolecular chemical bonds. The chemical agent is applied in a way which causes the chemical agent to contact and diffuse into the fabricated article, for example, by immersion. In one instance, following treatment with the chemical agent, the crosslinked fabricated article is dried to remove any process solvents or diluents. In one instance, following drying the fabricated article is heated in air or an inert atmosphere or a reduced pressure atmosphere to initiate and carry out the desired crosslinking reaction. In another instance, the crosslinking reaction is initiated by submersing the fabricated article in an inert fluid at a desired temperature or by placing the fabricated article in contact with a heated surface. For example, after exposure to the chemical agent, the fabricated article may be heated in air at 100-150 °C for one hour. In another example, after exposure to the chemical agent, a polyolefin fiber possessing crosslinkable functional groups can be heated by passage over cored, oil-heated rollers to induce crosslinking. In another instance, exposure of the fabricated article to the chemical agent may be combined with heating to cause the crosslinking reaction, such that both steps are accomplished simultaneously in a single process. In yet another instance, the fabricated article is prepared from a polyolefin possessing functional groups that can be crosslinked by steam, whereby the fabricated article is placed in a moisture oven to induce crosslinking, for example, the fabricated article can be placed in a moisture oven at 80 °C for three days.

Chemical crosslinking causes the crosslinkable functional groups to react to form new bonds, forming linkages between the various polymer chains which define the polyolefin resin having crosslinkable functional groups. The chemical agent which effectuates the crosslinking is selected based on the type of crosslinkable functional group(s) included in the polyolefin resin; a diverse array of reactions are known which crosslink crosslinkable functional groups via intermolecular and intramolecular chemical bonds. A suitable chemical agent is selected which is known to crosslink the crosslinkable functional groups present in the fabricated article to produce the crosslinked fabricated article. For example, without limiting the present disclosure, if the crosslinkable functional group attached to the polyolefin is a vinyl group, suitable chemical agents include free radical initiators such as peroxides or azo-bis nitriles, for example, dicumyl peroxide, dibenzoyl peroxide, t-butyl peroctoate, and azobisisobutyronitrile. If the crosslinkable functional group attached to the polyolefin is an acid, such as a carboxylic acid, or an anhydride, or an ester, or a glycidoxy group, a suitable chemical agent can be a compound containing at least two nucleophilic groups, including dinucleophiles such as diamines, diols, dithiols, for example ethylenediamine, hexamethylenediamine, butane diol, or hexanedithiol. Compounds containing more than two nucleophilic groups, for example glycerol, sorbitol, or hexamethylene tetramine can also be used. Mixed di- or higher-nucleophiles, which contain at least two different nucleophilic groups, for example ethanolamine can also be suitable chemical agents. If the crosslinkable functional group attached to the polyolefin is a mono-, di- or tri- alkoxy silyl group, water, and Lewis or Bronsted acid or base catalysts can be used as suitable chemical agents. For example, without limiting the present disclosure, Lewis or Bronsted acid or base catalysts include aryl sulfonic acids, sulfuric acid, hydroxides, zirconium alkoxides or tin reagents.

Crosslinking the fabricated article is necessary to ensure that the fabricated article retains its shape at the elevated temperatures required for the subsequent processing steps. Without crosslinking, polyolefin resins soften, melt or otherwise deform or breakdown at elevated temperatures. Crosslinking adds thermal stability to the fabricated article.

One advantage of using a chemical agent to perform the crosslinking is that it is possible to crosslink the crosslinkable functional groups throughout the fabricated article. Further, use of a chemical agent produces a fabricated article having a chemical structure which is suitable for being stabilized in air, as described herein. Other crosslinking mechanisms, such as irradiation, cause non-homogenous crosslinking, where some parts of the fabricated article will undergo more crosslinking than other areas of the fabricated article. Further, crosslinking with a chemical agent targets specific crosslinking reactions and allows control over the extent of crosslinking, unlike irradiation which causes a variety of chemical reactions beyond crosslinking. As such, crosslinking as induced by a chemical agent is preferred to irradiation.

As used herein, "oxidizing environment" refers to an atmosphere containing an oxidizing agent. Unexpectedly, it has been found that heated air at the normal oxygen content of approximately 21 percent by volume is a suitable oxidizing environment. As described above, the crosslinked fabricated article is heated in an oxidizing environment to yield a stabilized fabricated article. It is preferred that the oxidizing environment is continuously charged to the oven or other apparatus in which the stabilization process is executed to prevent depletion of the oxidizing agent and accumulation of by-products. The stabilized fabricated article is a crosslinked fabricated article which has been heat-treated in an oxidizing environment. Preferably, the crosslinked fabricated article is stabilized in flowing air at a temperature at or above 160 °C. In some embodiments, the temperature for stabilizing the crosslinked fabricated article is at least 120 °C, preferably at least 190 °C. In some embodiments, the temperature for stabilizing the crosslinked fabricated article is no more than 400 °C, preferably no more than 300 °C. In one instance, the crosslinked fabricated article is introduced to a heating chamber which is already at the desired temperature. In another instance, the fabricated article is introduced to a heating chamber at or near ambient temperature, which chamber is subsequently heated to the desired temperature. In some embodiments the heating rate is at least 1 °C/minute. In other embodiments the heating rate is no more than 15 °C/minute. In yet another instance, the chamber is heated step wise, for instance, the chamber is heated to a first temperature for a time, such as, 120 °C for one hour, then is raised to a second temperature for a time, such as 180 °C for one hour, and third is raised to a holding temperature, such as 240 °C for 12 hours. The stabilization process involves holding the crosslinked fabricated article at the given temperature for periods up to 100 hours depending on the dimensions of the fabricated article. The stabilization process yields a stabilized fabricated article which is a precursor for a carbonaceous article. Without being limited by theory, the stabilization process oxidizes the crosslinked fabricated article and causes changes to the hydrocarbon structure that increases the crosslink density while decreasing the hydrogen/carbon ratio of the crosslinked fabricated article.

Unexpectedly, it has been found that heated air at the atmospheric oxygen content of approximately 21 percent by volume is a suitable oxidizing environment. Previous stabilization techniques have involved the use of large quantities of sulfuric acid, or other chemicals, to oxidize the crosslinked fabricated article. By using air as the oxidizing agent, the cost to prepare the stabilized fabricated article is greatly reduced. It is unexpected to find that a polyolefin-based fabricated article, which was chemically crosslinked, can be stabilized by holding in an oxidizing atmosphere for a period of time.

In another aspect, the present disclosure describes a stabilized fabricated article which is formed from a polyolefin precursor (resin). In one instance, the stabilized fabricated article is formed according to the process described herein.

In yet another aspect, a carbonaceous article and a process for making the same are provided. Carbonaceous articles are articles which are rich in carbon; carbon fibers, carbon sheets and carbon films are examples of carbonaceous articles. Carbonaceous articles have many applications, for example, carbon fibers are commonly used to reinforce composite materials, such as in carbon fiber reinforced epoxy composite, while carbon discs or pads are used for high performance braking systems.

The carbonaceous articles described herein are prepared by heat-treating the stabilized fabricated articles in an inert environment. The inert environment is an environment surrounding the stabilized fabricated article that shows little reactivity with carbon at elevated temperatures, preferably a high vacuum or an oxygen-depleted atmosphere, more preferably a nitrogen atmosphere or an argon atmosphere. It is desirable to remove volatile by-products from the inert environment by continuous application of vacuum or by continuously flowing the inert atmosphere through the furnace or other apparatus in which the carbonization process is executed in order to prevent accumulation of such by-products in the inert environment. It is understood that trace amounts of oxygen may be present in the inert atmosphere. In one instance, the temperature of the inert environment is at or above 600 °C. Preferably, the temperature of the inert environment is at or above 800 °C. In one instance, the temperature of the inert environment is no more than 3000 °C. Temperatures at or near the upper end of that range will produced a graphite article, while temperatures at or near the lower end of the range will produce a carbon article.

In order to prevent bubbling or damage to the fabricated article during carbonization, it is preferred to heat the inert environment in a gradual or stepwise fashion. In one embodiment, the stabilized fabricated article is introduced to a heating chamber containing an inert environment at or near ambient temperature, which chamber is subsequently heated over a period of time to achieve the desired final temperature. In some embodiments, the heating rate is at least 1 °C/minute. In other embodiments the heating rate is no more than 15 °C/minute. The heating schedule can also include one or more hold steps for a prescribed period at the final temperature or an intermediate temperature or a programmed cooling rate before the article is removed from the chamber.

In yet another embodiment, the chamber containing the inert environment is subdivided into multiple zones, each maintained at a desired temperature by an appropriate control device, and the stabilized fabricated article is heated in a stepwise fashion by passage from one zone to the next via an appropriate transport mechanism, such as a motorized belt. In the instance where a stabilized fabricated article is a fiber, this transport mechanism can be the application of a traction force to the fiber at the exit of the carbonization process while the tension in the stabilized fiber is controlled at the inlet.

Advantageously, it has been found that this process for producing a carbonaceous article is preferred to prior processes because polyolefin is more economical than previous precursors, because crosslinking with a chemical agent is more economical and produces a more desirable chemical structure than crosslinking by irradiation, and because air oxidation is more economical than previously reported stabilization methods for polyolefins. In sum, the present process is a significant improvement over previous processes.

Some embodiments of the invention will now be described in detail in the following Examples.

### Example 1A

An ethylene-co-propylene-co-ethylidene norbornene polyolefin resin having crosslinkable functional groups (EPDM 1) containing 85% ethylene, 10.1% propylene and 4.9% ethylidene norbornene (melting point = 90 °C, density = 0.910 g/cm³, Melt Index of 1.0 g/10 min at 190 °C using a 2.16 kg applied weight, and Mooney Viscosity of 20 MU at 125 °C) was formed into a fabricated article by pressing the polyolefin resin having crosslinkable functional groups into a film with a mean thickness of 647 µm by compression molding.

### Example 1B

A rectangular sheet of the fabricated article prepared in Example 1A was immersed in neat t-butyl peroctoate (TBPO) liquid as the chemical agent at 25 °C for 72 hours. After drying the surface of the film, the film was suspended from a fine wire and heated in air at 120 °C for 1 hour to crosslink the film. The crosslinked film was then stabilized by heating in air at 180 °C for 1 hour, followed by continued heating in air at 240°C for 12 hours, thereby yielding a stabilized fabricated article. The stabilized fabricated article was observed to have retained a rectangular shape with sharp corners; the color of the resulting stabilized fabricated article was observed as dark brown or black.

### Example 1C

The stabilized fabricated article prepared according to Example 1B was subsequently heated from 20 °C to 1150 °C at a ramp rate of 4 °C/minute in an atmosphere of flowing nitrogen, thereby yielding a carbonaceous article.

### Comparative Example 1

A rectangular sheet of the fabricated article prepared in Example 1A was hung from a fine wire and heated in air at 120 °C for 1 hour, then heated in air at 180 °C for 1 hour, and then heated in air at 240 °C for 12 hours. Following heating, the fabricated article was observed as significantly deformed, such that the fabricated article was no longer rectangular in shape and no longer had sharp corners; the color of the fabricated article was observed as dark brown or black. This Comparative Example illustrates that for a fabricated article formed from a polyolefin resin having a high concentration of crosslinkable pendant vinyl groups, if the fabricated article is not crosslinked effectively using a chemical agent (the TBPO peroxide), then the polyolefin-based fabricated article deforms when subjected to the stabilization process, and thus is not suitable to be prepared as a carbonaceous article.

### Comparative Example 2

An ethylene/1-octene copolymer resin without crosslinkable functional groups (density = 0.900 g/ cm³, Melt Index = 30 g/10 min at 190 °C using a 2.16 kg applied weight, crystallinity = 16 %) was formed into a fabricated article by pressing the polyolefin resin pellets into a film with a mean thickness of 102 µm by compression molding. This film was suspended from a fine wire, which was hung in a preheated oven (in air) at 120 °C for 1 hour. At the end of this period, the film was observed as having fallen from its wire hanger and formed a puddle of molten polymer at the bottom of the oven. This Comparative Example illustrates that for a fabricated article formed from a non-crosslinked polyolefin, without crosslinkable functional groups, the fabricated article loses its shape above the melting point and is thus not suitable for oxidation at temperatures above the melting point to produce a stabilized fabricated article.

### Example 2A

An ethylene-co-propylene-co-ethylidene norbornene polyolefin resin having crosslinkable functional groups (EPDM 1) containing 85% ethylene, 10.1% propylene and 4.9% ethylidene norbornene (melting point = 90 °C, density = 0.910 g/cm³, Melt Index of 1.0 g/10 min at 190 °C using a 2.16 kg applied weight, and Mooney Viscosity of 20 MU at 125 °C) was formed into a fabricated article by pressing the polyolefin resin having crosslinkable functional groups into a film with a mean thickness of 102 µm by compression molding.

The fabricated article was immersed in neat t-butyl peroctoate (TBPO) at 25 °C for 72 hours. After drying the surface of the fabricated article, the fabricated article was heated in air at 120 °C and held at this temperature for one hour to crosslink the fabricated article.

### Example 2B

Strips of the crosslinked fabricated article prepared in Example 2A were placed on a platinum Thermogravimetric Analysis (TGA) pan. The pan was loaded into a TA Instruments Q5000 TGA which first heated the crosslinked fabricated article in air from 20 °C to 230 °C, at a ramp rate of 10 °C/minute, and then held the crosslinked fabricated article at 230 °C for 10 hours, thereby yielding a stabilized fabricated article, and which second heated the stabilized fabricated article in a nitrogen atmosphere from 230 °C to 800 °C, at a ramp rate of 10 °C/minute, thereby yielding a carbonaceous article. The carbonaceous article was measured as having 14.71% of the mass of the fabricated article.

### Example 3A

An ethylene-co-glycidyl methacrylate polyolefin resin having crosslinkable functional groups containing 92% ethylene and 8.0 % glycidyl methacrylate (melting point =106 °C, d = 0.94 g/cm³, Melt Index of 5.0 g/10 min at 190 °C using a 2.16 kg applied weight) was formed into a fabricated article by pressing the polyolefin resin having crosslinkable functional groups into a film with a mean thickness of 114 µm by compression molding. The fabricated article was immersed in ethylenediamine at 25 °C for 16 hr, then dried, then heated in air to 120 °C and held at this temperature for 1 hour, thereby yielding a crosslinked fabricated article.

### Example 3B

A rectangular sheet of the crosslinked fabricated article prepared in Example 3A was hung from a fine wire and heated in air to 180 °C for 1 hour, then to 240 °C for 12 hours, thereby producing a stabilized fabricated article. At the conclusion of this air oxidation process, the film exhibited a dark brown color and retained its rectangular shape.

### Example 3C

Strips of the crosslinked fabricated article prepared in Example 3A were placed on a platinum Thermogravimetric Analysis (TGA) pan. The pan was loaded into a TA Instruments Q5000 TGA which first heated the crosslinked fabricated article in air from 20 °C to 230 °C, at a ramp rate of 10 °C/minute, and held the crosslinked fabricated article at 230 °C for 10 hours, and which second heated the stabilized fabricated article in nitrogen from 230 °C to 800 °C, at a ramp rate of 10 °C/minute, thereby yielding a carbonaceous article. The carbonaceous article was measured as having 16.94% of the mass of the fabricated article

### Example 4A

A maleic anhydride grafted high density polyethylene polyolefin resin having crosslinkable functional groups, sold under the AMPLIFY GR 204 designation by the Dow Chemical Company, containing greater than 1 % by weight maleic anhydride (melting point = 127 °C, d = 0.954 g/cm³, Melt Index of 12.0 g/10 min at 190 °C using a 2.16 kg applied weight) was formed into a fabricated article by pressing the polyolefin resin having crosslinkable functional groups into a film with a mean thickness of 102 µm by compression molding. The fabricated article was immersed in ethylenediamine at 25 °C for 16 hr, then dried, and then heated in air to 140 °C and held at this temperature for 1 hour, thereby yielding a crosslinked fabricated article.

### Example 4B

Strips of the crosslinked fabricated article prepared in Example 4A were placed on a platinum Thermogravimetric Analysis (TGA) pan. The pan was loaded into a TA Instruments Q5000 TGA which first heated the crosslinked fabricated article in air from 20 °C to 230 °C, at a ramp rate of 10 °C/minute, and then held the crosslinked fabricated article at 230 °C for 10 hours, thereby yielding a stabilized fabricated article, and which second heated the stabilized fabricated article in nitrogen from 230 °C to 800 °C, at a ramp rate of 10 °C/minute, thereby yielding a carbonaceous article. The carbonaceous article was measured as having 17.08% of the mass of the fabricated article.

### Example 5A

A maleic anhydride grafted very low density polyethylene resin having crosslinkable functional groups, sold under the AMPLIFY GR 209 designation by the Dow Chemical Company, containing 0.5 to 1.0 % by weight maleic anhydride (melting point = 115 °C, d = 0.898 g/cm³, Melt Index of 2.0 g/10 min at 190 °C using a 2.16 kg applied weight) was formed into a fabricated article by pressing the polyolefin resin having crosslinkable functional groups into a film with a mean thickness of 114 µm by compression molding. The fabricated article was then immersed in ethylenediamine at 25°C for 16 hr, and then dried, then heated in air to 120 °C and held at this temperature for 1 hour, thereby yielding a crosslinked fabricated article.

### Example 5B

Strips of the crosslinked fabricated article prepared in Example 5A were placed on a platinum Thermogravimetric Analysis (TGA) pan. The pan was loaded into a TA Instruments Q5000 TGA which first heated the crosslinked fabricated article in air from 20 °C to 230 °C, at a ramp rate of 10 °C/minute, and then held the crosslinked fabricated article in air at 230 °C for 10 hours, thereby yielding a stabilized fabricated article, and then heated the stabilized fabricated article in nitrogen from 230 °C to 800 °C, at a ramp rate of 10 °C/minute, thereby yielding a carbonaceous article. The carbonaceous article was measured as having 10.81% of the mass of the fabricated article.

### Example 6

An ethylene/1-octene copolymer resin (density = 0.941 g/ cm³, Melt Index = 35, g/10 min, crystallinity = 48 %) was grafted with vinyltrimethoxysilane (VTMS) using a peroxide in a 25mm twin screw extruder, thereby providing a polyolefin resin having crosslinkable functional groups. The polyolefin resin having crosslinkable functional groups contained 1.15 wt% VTMS as determined by Neutron Activation Analysis. The polyolefin resin having crosslinkable functional groups was melt spun with a commercial Hills Inc. spin line at 245 °C through a 143 hole die with a 350 micron orifice size, thereby forming a fabricated article in the nature of fibers. The resulting fibers were crosslinked by treatment with a 5% zirconium alkoxide catalyst (KenRich KenReact NZ-01) in isopropanol at room temperature for 4 hours, followed by treatment in a moisture oven for 3 days at 80 °C, thereby forming a crosslinked fabricated article with fibers measured as 19 microns in diameter. The crosslinked fabricated article was then heated in air at 230 °C for 10 hours, thereby yielding a stabilized fabricated article.

### Example 7

An ethylene/1-octene copolymer resin (density = 0.900 g/ cm3, Melt Index = 30 g/10 min, crystallinity = 16 %) was grafted with VTMS using a peroxide in a 25mm twin screw extruder, thereby providing a polyolefin resin having crosslinkable functional groups. The polyolefin resin having crosslinkable functional groups contained 1.03 wt% VTMS as determined by Neutron Activation Analysis. The polyolefin resin having crosslinkable functional groups was melt spun with a commercial Hills Inc., spin line at 210 °C through a 143 hole die with a 350 micron orifice size, thereby forming a fabricated article in the nature of fibers. The resulting fibers were crosslinked by treatment with a 5% zirconium alkoxide catalyst (KenRich KenReact NZ-01) in isopropanol at room temperature for 4 hours, followed by treatment in a moisture oven for 3 days at 80°C, thereby forming a crosslinked fabricated article with fibers measured as 17-23 microns in diameter. The crosslinked fabricated article was then heated in air at 230°C for 10 hours, thereby yielding a stabilized fabricated article.

### Example 8

An ethylene/1-octene copolymer resin (density = 0.870 g/ cm3, melt index = 30 g/10 min, crystallinity = 9 %) was grafted with VTMS using a peroxide in a 25mm twin screw extruder, thereby providing a polyolefin resin having crosslinkable functional groups. The polyolefin resin having crosslinkable functional groups contained 1.23 wt% VTMS as determined by Neutron Activation Analysis. The polyolefin resin having crosslinkable functional groups was melt spun with a commercial Hills Inc. spin line at 190°C through a 143 hole die with a 350 micron orifice size, thereby forming a fabricated article in the nature of fibers. The resulting fibers were crosslinked by treatment with a 5% zirconium alkoxide catalyst (KenRich KenReact NZ-01) in isopropanol at room temperature for 4 hours, followed by treatment in a moisture oven for 3 days at 80°C, thereby forming a crosslinked fabricated article with fibers measured as 23 microns in diameter. The crosslinked fabricated article was then heated in air at 230°C for 10 hours, thereby yielding a stabilized fabricated article.

### Example 9

A copolymer of ethylene and vinyl trimethoxy silane (density = 0.922 g/cm³, Melt Index = 1.5, -1.5% VTMS content, crystallinity = 42 %) was melt spun with a commercial Hills Inc. spin line at 285 °C through a 143 hole die with 350 micron orifice size. The resulting fibers were approximately 200 microns in diameter. The resulting fibers were crosslinked by treatment with a 5% zirconium alkoxide catalyst (KenRich KenReact NZ-01) in isopropanol at room temperature for 4 hours, followed by treatment in a moisture oven for 3 days at 80 °C.

The crosslinked fibers were placed on a platinum Thermogravimetric Analysis (TGA) pan. The pan was loaded into a TA Instruments Q5000 TGA which first heated the crosslinked fabricated article in air from 20 °C to 230 °C, at a ramp rate of 10 °C/minute, and held the crosslinked fabricated article at 230 °C for 10 hours, and which second heated the stabilized fabricated article in nitrogen from 230 °C to 800 °C, at a ramp rate of 10 °C/minute, thereby yielding a carbonaceous article in the nature of a fiber. The carbonaceous article was measured as having char yield of 14.7%.

### Example 10

A copolymer of ethylene and vinyl trimethoxy silane (density = 0.922 g/cm³, Melt Index = 1.5, -1.5% VTMS content, crystallinity = 42 %) was melt spun with a commercial Hills Inc. spin line at 285 °C through a 143 hole die with 350 micron orifice size. Lower temperature extrusion could not be performed given the low melt index of this resin. The resulting fibers were approximately 200 microns in diameter. The resulting fibers were placed in a glass vial and heated to 190 °C in air for 20 hours. During the course of this thermal air oxidation step the fibers progressively darkened in color from white to brown to black. The resulting were characterized by TEM and Raman spectroscopy as being highly disordered amorphous carbon with a high oxidized carbon content.

### Example 11

The stabilized fibers resulting from Example 9 were placed into a quartz vessel and heated under nitrogen to 1150 °C over the course of 5 hours. The resulting fibers were characterized by TEM and Raman spectroscopy as being an amorphous graphitic material containing wavy lattice structure with some two dimensional ordering.

## Claims

1. A process for producing a stabilized fabricated article, the process comprising:
(a) providing a polyolefin resin having crosslinkable functional groups;
(b) converting the polyolefin resin to a fabricated article;
(c) crosslinking at least a portion of the crosslinkable functional groups to yield a crosslinked fabricated article; and
(d) heating the crosslinked fabricated article in an oxidizing environment to yield the stabilized fabricated article.

2. The process of claim 1, wherein the polyolefin resin of step (a) has at least 0.1 mol% crosslinkable functional groups.

3. The process of any one of claims 1-2, wherein a chemical agent is used in step (c) to crosslink the crosslinkable functional groups.

4. The process of any one of claims 1-3, wherein step (c) further comprises heating the fabricated article to a temperature at or below 160 °C.

5. The process of any one of claims 1-4, wherein irradiation is not used in step (c) to crosslink the crosslinkable functional groups.

6. The process of any one of claims 1-5, wherein step (d) comprises heating the crosslinked fabricated article at or above 160 °C.

7. The process of any one of claims 1-6, wherein the oxidizing environment of step (d) is air.

8. The process of any one of claims 1-7, wherein step (b) comprises converting said polyolefin resin to a fabricated article by fiber spinning, film extrusion casting, blown film processing, profile extrusion through a die, injection molding, solution casting or compression molding.

9. A process for making a carbonaceous article, the process comprising heating the stabilized fabricated article of any one of claims 1-8 at or above 600 °C in an inert environment.

## Patentansprüche

1. Ein Verfahren zum Produzieren eines stabilisierten gefertigten Artikels, wobei das Verfahren Folgendes beinhaltet:
(a) Bereitstellen eines Polyolefinharzes mit vernetzbaren funktionellen Gruppen;
(b) Umwandeln des Polyolefinharzes in einen gefertigten Artikel;
(c) Vernetzen mindestens eines Teils der vernetzbaren funktionellen Gruppen, um einen vernetzten gefertigten Artikel zu ergeben; und
(d) Erhitzen des vernetzten gefertigten Artikels in einer oxidierenden Umgebung, um den stabilisierten gefertigten Artikel zu ergeben.

2. Verfahren gemäß Anspruch 1, wobei das Polyolefinharz aus Schritt (a) mindestens 0,1 Mol-% vernetzbare funktionelle Gruppen aufweist.

3. Verfahren gemäß einem der Ansprüche 1-2, wobei in Schritt (c) ein chemisches Mittel verwendet wird, um die vernetzbaren funktionellen Gruppen zu vernetzen.

4. Verfahren gemäß einem der Ansprüche 1-3, wobei Schritt (c) ferner das Erhitzen des gefertigten Artikels auf eine Temperatur von 160 °C oder darunter beinhaltet.

5. Verfahren gemäß einem der Ansprüche 1-4, wobei in Schritt (c) keine Bestrahlung verwendet wird, um die vernetzbaren funktionellen Gruppen zu vernetzen.

6. Verfahren gemäß einem der Ansprüche 1-5, wobei Schritt (d) das Erhitzen des vernetzten gefertigten Artikels auf 160 °C oder darüber beinhaltet.

7. Verfahren gemäß einem der Ansprüche 1-6, wobei die oxidierende Umgebung aus Schritt (d) Luft ist.

8. Verfahren gemäß einem der Ansprüche 1-7, wobei Schritt (b) das Umwandeln des Polyolefinharzes in einen gefertigten Artikel durch Faserspinnen, Folienextrusionsgießen, Blasfolienverarbeitung, Profilextrusion durch eine Matrize, Spritzguss, Lösungsgießen oder Formpressen beinhaltet.

9. Ein Verfahren zum Herstellen eines kohlenstoffhaltigen Artikels, wobei das Verfahren das Erhitzen des stabilisierten gefertigten Artikels gemäß einem der Ansprüche 1-8 auf 600 °C oder darüber in einer inerten Umgebung beinhaltet.

## Revendications

1. Un procédé pour produire un article fabriqué stabilisé, le procédé comprenant :
(a) le fait de fournir une résine de polyoléfine ayant des groupes fonctionnels réticulables ;
(b) le fait de convertir la résine de polyoléfine en un article fabriqué ;
(c) le fait de réticuler au moins une portion des groupes fonctionnels réticulables pour donner un article fabriqué réticulé ; et
(d) le fait de chauffer l'article fabriqué réticulé dans un environnement oxydant pour donner l'article fabriqué stabilisé.

2. Le procédé de la revendication 1, dans lequel la résine de polyoléfine de l'étape (a) a au moins 0,1 % en moles de groupes fonctionnels réticulables.

3. Le procédé de n'importe laquelle des revendications 1 à 2, dans lequel un agent chimique est utilisé à l'étape (c) pour réticuler les groupes fonctionnels réticulables.

4. Le procédé de n'importe laquelle des revendications 1 à 3, dans lequel l'étape (c) comprend en sus le fait de chauffer l'article fabriqué à une température égale ou inférieure à 160 °C.

5. Le procédé de n'importe laquelle des revendications 1 à 4, dans lequel une irradiation n'est pas utilisée à l'étape (c) pour réticuler les groupes fonctionnels réticulables.

6. Le procédé de n'importe laquelle des revendications 1 à 5, dans lequel l'étape (d) comprend le fait de chauffer l'article fabriqué réticulé à 160 °C ou plus.

7. Le procédé de n'importe laquelle des revendications 1 à 6, dans lequel l'environnement oxydant de l'étape (d) est de l'air.

8. Le procédé de n'importe laquelle des revendications 1 à 7, dans lequel l'étape (b) comprend le fait de convertir ladite résine de polyoléfine en un article fabriqué par filage de fibres, coulage par extrusion d'un film, traitement de film soufflé, extrusion de profilé à travers une filière, moulage par injection, coulage de solution ou moulage par compression.

9. Un procédé pour réaliser un article carboné, le procédé comprenant le fait de chauffer l'article fabriqué stabilisé de n'importe laquelle des revendications 1 à 8 à 600 °C ou plus dans un environnement inerte.
